(19) **Europäisches Patentamt**

**European Patent Office**

**Office européen des brevets**

(11) **EP 1 110 976 B1**

(12) **EUROPÄISCHE PATENTSCHRIFT**

(45) Veröffentlichungstag und Bekanntmachung des Hinweises auf die Patenterteilung:
**14.06.2006   Patentblatt 2006/24**

(51) Int Cl.:
*C08F 10/06* (2006.01)          *C08L 23/10* (2006.01)

(21) Anmeldenummer: **00127654.2**

(22) Anmeldetag: **18.12.2000**

(54) **Teilkristalline Propylenpolymerisat-Zusammensetzungen mit guter Eignung zur Herstellung von biaxial orientierten Folien**

Partially crystalline propylene polymer compositions having an improved suitability for the preparation of biaxially oriented films

Compositions de polymères de propylène partiellement cristallins adaptées à la production des films à orientation biaxiale

(84) Benannte Vertragsstaaten:
**AT BE CH CY DE DK ES FI FR GB GR IE IT LI LU MC NL PT SE TR**

(30) Priorität: **21.12.1999   DE 19962130**

(43) Veröffentlichungstag der Anmeldung:
**27.06.2001   Patentblatt 2001/26**

(73) Patentinhaber: **Basell Poliolefine Italia S.r.l.**
**20124 Milano (IT)**

(72) Erfinder:
 • **Bidell, Wolfgang, Dr.**
  **68159 Mannheim (DE)**
 • **Hingmann, Roland, Dr.**
  **08960 Sant Just Desvern (Barcelona) (ES)**
 • **Langhauser, Franz, Dr.**
  **67152 Ruppertsberg (DE)**
 • **Lilge, Dieter, Dr.**
  **67117 Limburgerhof (DE)**
 • **Rauschenberger, Volker, Dr.**
  **67304 Eisenberg (DE)**
 • **Schweier, Günther, Dr.**
  **67159 Friedelsheim (DE)**
 • **Stricker, Florian, Dr.**
  **69120 Heidelberg (DE)**
 • **Suhm, Jürgen, Dr.**
  **67063 Ludwigshafen (DE)**

(74) Vertreter: **Colucci, Giuseppe et al**
**Basell Poliolefine Italia S.r.l.**
**Intellectual Property,**
**P.le Privato G. Donegani, 12**
**Casella Postale 19**
**44100 Ferrara (IT)**

(56) Entgegenhaltungen:
 EP-A- 0 444 671          EP-A- 0 887 357
 WO-A-96/20225          WO-A-98/56580
 WO-A-98/59002

**Beschreibung**

Die vorliegende Erfindung betrifft teilkristalline Propylenpolymerisat-Zusammensetzungen, die eine besonders gute Eignung zur Herstellung von biaxial orientierten Folien aufweisen. Außerdem betrifft die Erfindung die Verwendung der teilkristallinen Propylenpolymerisat-Zusammensetzungen zur Herstellung von Folien, Fasern und Formkörpern sowie die Folien, Fasern und Formkörper aus diesen Zusammensetzungen.

Unter der Bezeichnung Polypropylen werden im Allgemeinen eine Vielzahl unterschiedlicher Polymerisate verstanden, die alle gemeinsam haben, daß sie zu einem wesentlichen Teil aus dem Monomer Propylen aufgebaut wurden. Die verschiedenen Polypropylene werden in der Regel durch koordinative Polymerisation an Katalysatoren aus Übergangsmetallen erhalten, die die Monomere überwiegend geordnet in eine wachsende Polymerkette einbauen.

Mit den üblichen Koordinationskatalysatoren erhält man bei der Polymerisation von Propylen Polymerketten, die an jedem zweiten Kohlenstoffatom eine Methylseitengruppe aufweisen. Die Polymerisation verläuft also regioselektiv. Je nach Orientierung der Monomere beim Einbau in die Kette werden verschiedene stereochemische Konfigurationen erhalten. Sind die Monomere beim Einbau jeweils gleich angeordnet, befinden sich dann in der Polymerkette alle Methylseitengruppen auf der selben Seite der Hauptkette. Man spricht von isotaktischem Polypropylen. Werden die Monomere mit jeweils alternierender räumlicher Orientierung in die Kette eingebaut, bezeichnet man das erhaltene Polypropylen als syndiotaktisch. Beide stereoregulär aufgebauten Typen sind teilkristallin und weisen somit eine Schmelztemperatur auf.

Da die Koordinationskatalysatoren die Propylen-Monomere jedoch nicht absolut einheitlich einbauen, sondern manche Monomer anders einfügen als die Mehrheit der anderen, weisen die gebildeten Polymerketten gegenüber der vorherrschenden Anordnung jeweils "Fehler" auf. Deren Anzahl kann erheblich variieren.

Je länger die fehlerfrei aufgebauten Sequenzen der Polymerketten sind, desto leichter kristallisieren die Ketten und desto höher sind die Kristallinität und die Schmelztemperatur des Polypropylens.

Sind die Methylseitengruppen stereochemisch unregelmäßig angeordnet, bezeichnet man die Polypropylene als ataktisch. Diese sind vollständig amorph und weisen somit keinen Schmelzpunkt auf.

In technischem Maßstab wird Polypropylen zur Zeit meistens mit heterogenen Katalysatoren auf Basis von Titan hergestellt, wobei ein überwiegend isotaktisches Polymerisat erzeugt wird. Diese Katalysatoren, für die sich die Bezeichnung Ziegler-Natta-Katalysatoren eingebürgert hat, weisen mehrere unterschiedliche polymerisationsaktive Zentren auf. Die Zentren unterschieden sich dabei sowohl in ihrer Stereospezifität, d.h. darin, wieviele "Fehler" die entstandenen Ketten aufweisen, als auch darin, wie hoch die mittlere Molmasse der gebildeten Ketten ist. Als überwiegende Fehler werden jeweils Stereofehler beobachtet, d.h. einzelne Propylen-Monomere wurden syndiospezifisch anstatt isospezifisch eingebaut. Das Resultat der Polymerisation mit solchen heterogenen Katalysatoren ist also eine Mischung verschiedener Polymerketten, die sich sowohl in ihrer Stereochemie als auch in ihrer Molmasse unterscheiden.

Ein wesentliches Anwendungsgebiet für Polypropylene sind Folien, insbesondere biaxial gereckten Folien, die häufig auch als BOPP-("Biaxial Orientiertes Polypropylen-")Folien bezeichnet werden.

Eine generelles Ziel für fast alle Entwicklungen auf dem Gebiet der Polypropylene ist es, die löslichen Anteile der eingesetzten Polymerisate zu verringern. Möglich ist dies häufig durch die Verwendung optimierter konventioneller Ziegler-Natta-Katalysatoren. Dadurch werden zum einen die organoleptischen Eigenschaften verbessert, was vorteilhaft für Anwendungen im medizinischen und Nahrungsmittelsektor ist, und zum anderen wirkt sich dies positiv auf die mechanischen Eigenschaften, insbesondere die Steifigkeit, aus. Für die Herstellung von biaxial gereckten Polypropylen-Folien lassen sich solche Polypropylene mit abgesenkten löslichen Anteilen allerdings nicht einsetzen, da sie sich nicht bzw. nur schlecht zu den Folien verarbeiten lassen. Es wurden deshalb eine Reihe von Anstrengungen unternommen, durch Variationen in der Zusammensetzung für die Herstellung von biaxial gereckten Polypropylen-Folien geeignete Polypropylene zu finden.

In der EP-A 339 804 wird eine Mischung aus einem Homopolypropylen und einem statistischen Propylencopolymerisat beschrieben, wobei das Comonomer im oberen Bereich der Molekulargewichtsverteilung der Mischung eingebaut ist. Solche Mischungen weisen gute optische und mechanische Eigenschaften auf, sind aber in der Verarbeitbarkeit eingeschränkt.

Die EP-A 115 940 offenbart zur Herstellung von biaxial gereckten Folien geeignete Propylen-Ethylen-Copolymerisate mit 0,1 bis 2,0 mol% Ethylen und einer hohen Isotaktizität. Diese Polymerisate besitzen eine gute Dehnbarkeit, Steifigkeit, Transparenz, Schlagzähigkeit und Wärmeschrumpfbeständigkeit. Allerdings genügen sie in ihren mechanischen, rheologischen und optischen Eigenschaften häufig noch nicht den Ansprüchen der Hersteller von BOPP-Folien.

Die EP-A 657 476 beschreibt ein $\alpha$-Olefinpolymerisat, erhalten durch Polymerisation eines $\alpha$-Olefins mit 3 oder mehr Kohlenstoffatomen, dessen Zusammensetzung über die Gewichtsanteile an bei 20°C in Xylol löslichen und an bei 105°C in Xylol unlöslichen Anteilen definiert ist.

In der JP-A 10 053 675 wird eine Polypropylenzusammensetzung beschrieben, bestehend aus einem hochmolekularen kristallinen Polypropylen mit einem löslichen Anteil von weniger als 5% und einer niedermolekularen Polyolefinmasse mit einem löslichen Anteil von mehr als 30%.

EP 0 887 357 beschreibt Polypropylenpolymerisate und deren Fraktionierung nach TREF sowie deren Verwendung zur Herstellung von Filmen.
Diese Propylenpolymerisate werden mit Hilfe eines Ziegler-Natta-Katalysators hergestellt und weisen Schmelzpunkte höher als 165°C auf.

WO 98/59002 beschreibt heterophasiges Polypropylen und seine Verwendung für Filme. Diese Propylenpolymerisate sind weich. Diese Propylenpolymerisate werden ebenfalls mit Hilfe eines Ziegler-Natta-Katalysators hergestellt Die Schmelzpunkte der Produkte liegen unter 135°C.

Die aus dem Stand der Technik bekannten Propylenpolymerisat-Zusammensetzungen ermöglichen zwar die Herstellung von biaxial orientierten Polypropylen-Folien, sie weisen jedoch nicht gleichzeitig eine optimale Verarbeitbarkeit und sehr gute mechanische Eigenschaften der Folien auf. Dies bedeutet, daß es bisher nicht gelungen ist, den gegenläufigen Zusammenhang zwischen Verarbeitbarkeit und mechanischen Eigenschaften der Folien zu entkoppeln. Der vorliegenden Erfindung lag daher die Aufgabe zugrunde, Propylenpolymerisat-Zusammensetzungen zu entwickeln, die gleichzeitig eine hervorragende Verarbeitbarkeit zu biaxial gereckten Folien aufweisen und aus denen sich Folien mit sehr guten mechanischen und optischen Eigenschaften herstellen lassen. Weiterhin sollten diese mit einem möglichst wenig aufwendigen Verfahren zugänglich sein und die Folien sollten eine gute Barrierewirkung, beispielsweise gegen Sauerstoff und Wasserdampf, besitzen.

Demgemäß wurden teilkristalline Propylenpolymerisat-Zusammensetzung, hergestellt durch Polymerisation von Propylen, Ethylen und/oder $C_4$-$C_{18}$-Alk-1-enen, wobei mindestens 50 mol-% der enthaltenen Monomereinheiten durch Polymerisation von Propylen entstanden sind, gefunden, die eine guter Eignung zur Herstellung von biaxial orientierten Folien aufweisen,

wobei deren Schmelztemperatur $T_M$ im Bereich von 135°C bis 165°C liegt und die Schmelztemperatur $T_M$ durch Differential Scanning Calorimetry (DSC) nach ISO-Norm 3146 durch Aufheizen mit einer Heizgeschwindigkeit von 20°C/min einer vorher aufgeschmolzenen Probe bestimmt und in °C gemessen wird und das Maximum der erhaltenen Kurve darstellt,
und wobei sich die teilkristalline Propylenpolymerisat-Zusammensetzung in
von 55 bis 75 Gew.-% einer Hauptkomponente A,
von 5 bis 20 Gew.-% einer Nebenkomponente B und
von 10 bis 35 Gew.-% einer Nebenkomponente C
zerlegen läßt,
wobei man zur Bestimmung der Anteile der Komponenten A, B und C eine TREF (Temperature Rising Elution Fractionation) durchführt, bei der man die Polymerisate zunächst in siedendem Xylol löst, anschließend die Lösung mit einer Kühlrate von 10°C/h auf 25°C abkühlt und dann mit steigender Temperatur zunächst den bei der Temperatur ($T_M$/2) +7,5°C in Xylol löslichen Anteil der Propylenpolymerisat-Zusammensetzung löst und vom verbleibenden Feststoff abtrennt und anschließend mit steigender Temperatur bei allen höheren Temperaturen 70°C, 75°C, 80°C, 85°C, 90°C, 94°C, 98°C, 102°C, 107°C, 112°C, 117°C, 122°C und 125°C die im Temperaturintervall zwischen dieser Elutionstemperatur und der vorhergehenden Elutionstemperatur löslichen Fraktionen eluiert und diejenigen Fraktionen bei der weiteren Auswertung berücksichtigt, deren Masseanteil an der eingewogenen Propylenpolymerisat-Zusammensetzung mindestens 1 Gew.-% beträgt, und von allen zu berücksichtigenden Fraktionen die Molmassenverteilung durch Gelpermeationschromatographie (GPC) bei 145°C in 1,2,4-Trichlorbenzol mißt,
und die Hauptkomponente A von allen Fraktionen gebildet wird, die bei einer Temperatur oberhalb von ($T_M$/2)+7,5°C eluiert werden und eine mittlere Molmasse $M_N$ (Zahlenmittel) $\geq$ 120 000 g/mol aufweisen,
die Nebenkomponente B von der Fraktion gebildet wird, die bei der Temperatur ($T_M$/2)+7,5°C eluiert wird, und
die Nebenkomponente C von allen zu berücksichtigenden Fraktionen gebildet wird, die bei einer Temperatur oberhalb von ($T_M$/2)+7,5°C eluiert werden und eine mittlere Molmasse $M_N$ (Zahlenmittel) < 120 000 g/mol aufweisen,
und wobei die die Hauptkomponente A bildenden Fraktionen ein Verhältnis von Massenmittel ($M_w$) und Zahlenmittel ($M_n$) der Molmassen der Polymerisate $M_w/M_n$ > 4,5 aufweisen, einen Anteil von mindestens 10 Gew.% under Hauptkomponente A haben und
wobei bevorzugt der bei Raumtemperatur in Xylol lösliche Anteil $X_L$ der teilkristallinen Propylenpolymerisat-Zusammensetzung kleiner oder gleich 5 Gew.-% ist.

Weiterhin wurde auch die Verwendung der teilkristallinen Propylenpolymerisat-Zusammensetzung zur Herstellung von Folien, Fasern und Formkörpern sowie die Folien, Fasern und Formkörper aus dieser Zusammensetzung gefunden.

Die erfindungsgemäßen teilkristallinen Propylenpolymerisat-Zusammensetzungen werden durch Polymerisation von Propylen, Ethylen und/oder $C_4$-$C_{18}$-Alk-1-enen hergestellt. Unter der Bezeichnung $C_4$-$C_{18}$-Alk-1-ene sollen lineare oder verzweigte Alk-1-ene verstanden werden, die von vier bis achtzehn Kohlenstoffatome aufweisen. Bevorzugt sind lineare Alk-1-ene. Insbesondere sind Ethylen, But-1-en, Pent-1-en, Hex-1-en, Hept-1-en oder Oct-1-en oder Gemische aus diesen Comonomeren zu nennen, wobei bevorzugt Ethylen oder But-1-en verwendet wird. Die Propylenpolymerisat-Zusammensetzungen enthalten mindestens 50 mol-% an Monomereinheiten, die durch Polymerisation von Propylen entstanden sind. Bevorzugt ist der Gehalt an von Propylen abgeleiteten Monomereinheiten mindestens 70 mol-% und insbesondere mindestens 85 mol-%. In einer weiteren bevorzugten Ausführungsform wird bei der Herstellung der erfindungsgemäßen Propylenpolymerisat-Zusammensetzungen als einziges Monomer Propylen eingesetzt, d.h. es handelt sich um ein Propylenhomopolymerisat. Falls ein oder mehrere Comonomere verwendet wurden, kann es sein, daß die ganze Propylenpolymerisat-Zusammensetzung eine im wesentlichen gleiche Comonomerverteilung im Sinne von statistischen Copolymerisaten besitzt. Es kann aber auch sein, daß es sich wie bei den sogenannten Propylen-Impactcopolymerisaten um eine Mischung verschiedener Komponenten handelt, die unterschiedliche Comonomergehalte aufweisen.

Unter der Schmelztemperatur $T_M$ ist hierbei die Temperatur zu verstehen, bei der die durch Differential Scanning Calorimetry (DSC) nach ISO-Norm 3146 durch Aufheizen mit einer Heizgeschwindigkeit von 20°C/min einer vorher aufgeschmolzenen Probe erhaltenen Kurve der Enthalpie gegen die Temperatur das Maximum aufweist. Die DSC-Messung wird dabei üblicherweise so durchgeführt, daß man zunächst die Probe mit einer Aufheizrate von 20°C/min bis etwa 40°C über die Schmelztemperatur erwärmt, die Probe dann mit einer Kühlrate von 20°C/min dynamisch kristallisieren läßt und bei einem zweiten Aufheizen mit einer Aufheizrate von 20°C/min die Schmelztemperatur $T_M$ bestimmt.

Zur Bestimmung der Anteile der Komponenten A, B und C an der teilkristallinen Propylenpolymerisat-Zusammensetzungen führt man erfindungsgemäß eine Fraktionierung mittels TREF (Temperature Rising Elution Fractionation) durch und mißt dann die Molmassenverteilung aller Fraktionen durch Gelpermeationschromatographie (GPC).

GPC und TREF sind Methoden, mittels denen Polymerproben anhand unterschiedlicher physikalischer Eigenschaften aufgetrennt werden können. Während die GPC Polymerketten aufgrund ihrer Größe fraktioniert, erfolgt die Trennung bei der TREF nach der Kristallisierbarkeit der Polymermoleküle. Das Prinzip der "Temperature rising elution fractionation" wurde beispielsweise ausführlich von L. Wild, Advances in Polymer Sciences 98, 1 - 47 (1990) beschrieben. Hierbei wird eine Polymerprobe bei erhöhter Temperatur in einem Lösungsmittel gelöst, wobei die Konzentration der Lösung kleiner als 2 Gew.-% sein sollte. Die Polymerlösung wird nun sehr langsam (ca. 0,1°C/min) abgekühlt. Zuerst fallen dann die Polymermoleküle aus, die sehr gut kristallisieren und später Moleküle mit schlechteren Kristallisationseigenschaften. In dem Lösungsmittel entstehen somit Polymerpartikel, bei denen die Kristallisierbarkeit der Moleküle, aus denen sie bestehen, von innen nach außen abnimmt. Nach dem Abkühlen folgt die eigentliche Fraktionierung durch Aufheizen der Polymersuspension. Dabei werden zuerst bei relativ niedriger Temperatur die schlecht kristallisierenden Moleküle, die sich am äußeren Rand der Polymerpartikel befinden, aufgelöst und mit dem Lösungsmittel, in dem sie gelöst sind, abgetrennt. Bei höherer Temperatur folgen die besser kristallisierenden Polymerketten.

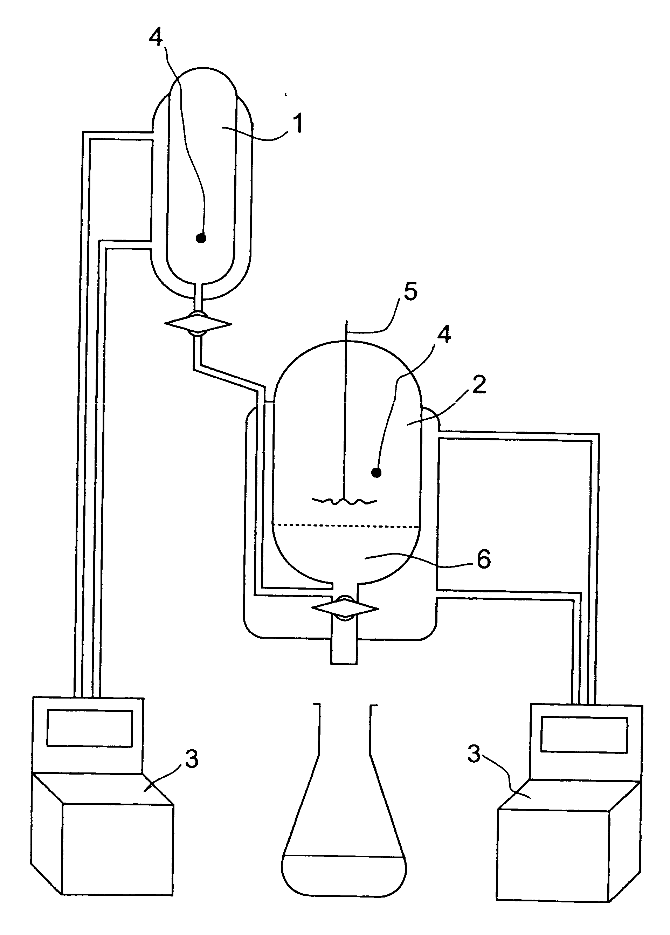

Als besonders geeignet zur Durchführung einer TREF hat sich die in Fig. 1 schematisch dargestellte Apparatur erwiesen. Diese besteht aus einem temperierbaren Vorratsgefäß (1), einem temperierbaren Elutionsgefäß (2), zwei Thermostaten (3) (beispielsweise Typ HC5 der Fa. Julabo), zwei Temperaturfühlern (4) und einem leistungsfähigen Mischer (5), mit dem die Polymersuspension durchmischt wird. Im unteren Teil des Elutionsgefäßes befindet sich durch ein Drahtnetz abgetrennte Glaswolle (6), die verhindert, daß beim Ablassen von Polymerlösungen ungelöste Polymerpartikel ausgetragen werden.

Um die teilkristallinen Propylenpolymerisat-Zusammensetzungen erfindungsgemäß zu charakterisieren, wird zunächst das Polymerisat in Xylol gelöst. Prinzipiell können hierbei alle Xylol-Isomere, Isomerenmischungen oder Isomerenmischungen mit Anteilen von Ethylbenzol verwendet werden, wobei aus wirtschaftlichen Erwägungen Isomermischungen bevorzugt sind. Allerdings ist es vorteilhaft weder reines p-Xylol noch Isomerenmischungen mit einem Anteil an p-Xylol von mehr als etwa 50 Gew.-% einzusetzen, da p-Xylol einen Festpunkt bei etwa 20°C besitzt.

Die Polymerprobe wird zum Lösen beispielsweise zusammen mit dem Lösungsmittel in ein Glasgefäß mit Magnetrührstab und aufgesetztem Rückflußkühler gegeben und das Glasgefäß danach in einem Temperierbad unter Rühren bis zum vollständigen Auflösen des Polymers erhitzt. Die Polymerlösung wird anschließend, z.B. durch Absenken des Glasgefäßes in das vorgeheizte Ölbad eines Thermostaten, mit einer Abkühlrate von 10°C/h bis auf Raumtemperatur gekühlt. Das definierte Abkühlen kann man durch die entsprechende Programmierung eines mit dem Thermostaten verbundenen Programmgebers erreichen. Üblicherweise werden für jede TREF-Analyse 5 g Propylenpolymerisat in 400 ml Xylol gelöst.

Die durch das definierte Auskristallisieren entstandene Polymersuspension wird in das Elutionsgefäßes (2) der in Fig. 1 gezeigten Apparatur überführt, die Temperatur auf $(T_M/2)+7,5°C$ erwärmt und die Polymerkristalle bei dieser Temperatur unter heftiger Durchmischung 15 Minuten extrahiert. Die Polymerlösung wird dann abgelassen, während die Kristalle im Extraktor zurückbleiben. Das gelöste Polymer wird vorzugsweise in kaltem Aceton (Temperatur < 0°C) ausgefällt, abfiltriert und 4 bis 5 Stunden bei 100°C im Vakuum getrocknet.

Anschließend werden 400 ml Xylol, das auf die nächst höhere der Temperaturen 70°C, 75°C, 80°C, 85°C, 90°C, 94°C, 98°C, 102°C, 107°C, 112°C, 117°C, 122°C und 125°C temperiert ist, den Polymerkristallen im Elutionsgefäß (2) zugegeben. Es wird wiederum 15 Minuten bei dieser nächst höheren Temperatur durchmischt. Hierbei gehen die im Temperaturintervall zwischen dieser Elutionstemperatur und der vorhergehenden Elutionstemperatur löslichen Anteile der teilkristallinen Propylenpolymerisat-Zusammensetzung in Lösung. Die entstandene Lösung wird dann abgelassen, während die Kristalle im Extraktor zurückbleiben.

Dieses Prozedere wird so lange wiederholt, bis alle Polymerkristalle in Lösung gegangen sind. Bei allen bisher untersuchen Polypropylenen war dies spätestens bei der Temperatur 125°C erreicht.

Die gelösten Polymere der einzelnen Fraktionen werden vorzugsweise in kaltem Aceton (Temperatur < 0°C) ausgefällt, abfiltriert und 4 bis 5 Stunden bei 100°C im Vakuum getrocknet.

Da bei der Fraktionierung einer Polymerisat-Zusammensetzung immer gewisse, wenn auch geringfügige Verluste auftreten, ist in der Regel die Summe der Mengen der Fraktionen niedriger als als die eingewogene Menge an Polymerisat. Solange mindestens 96 Gew.-% der eingewogene Menge des Propylenpolymerisat-Zusammensetzung in den Fraktionen wiedergefunden wird, ist dies unbeachtlich. Sollte der Verlust jedoch höher sein, muß die Fraktionierung wiederholt werden.

Weiterhin ist es nicht möglich, mit extrem kleinen Probemengen zuverlässig die Molmassenverteilung zu bestimmen. Um Fehler zu minimieren, ist die weitere Auswertung deshalb so durchzuführen, daß nur solche Fraktionen bei der Berechnung der Komponenten A, B und C berücksichtigt werden, deren Massenanteil an der eingewogenen Polymerprobe mindestens 1 Gew.-% beträgt. Von diesen Fraktionen wird die Molmassenverteilung durch Gelpermeationschromatographie (GPC) in 1,2,4-Trichlorbenzol bei 145°C bestimmt, wobei die Kalibrierung der GPC mittels Polypropylenstandards mit Molmassen von 100 bis $10^7$ g/mol erfolgt.

Entsprechend der Temperatur, bei der die jeweilige Fraktion eluiert wurde, d.h. der Temperatur bei der die Polymerketten entsprechend der des Temperaturfolge 70°C, 75°C, 80°C, 85°C, 90°C, 94°C, 98°C, 102°C, 107°C, 112°C, 117°C, 122°C in Lösung gegangen sind, und der mittleren Molmasse $M_n$ (Zahlenmittel) der jeweilige Fraktion lassen sich die Fraktionen nun den einzelnen Komponenten A, B und C zuordnen.

Die Hauptkomponente A wird von allen zu berücksichtigenden Fraktionen gebildet, die bei einer Temperatur oberhalb von $(T_M/2)+7{,}5$°C eluiert werden und eine mittlere Molmasse $M_n$ (Zahlenmittel) $\geq 120\,000$ g/mol aufweisen.

Die Nebenkomponente B wird von der Fraktion gebildet, die bei der Temperatur $(T_M/2)+7{,}5$°C eluiert wird. Wenn der Anteil der bei der Temperatur $(T_M/2)+7{,}5$°C eluierten Fraktion an der gesamten Propylenpolymerisat-Zusammensetzung kleiner 1 Gew.-% ist, ist somit der Anteil der Nebenkomponente B entsprechend der oben gegebenen Definition der zu berücksichtigenden Fraktionen gleich 0 Gew.-%.

Die Nebenkomponente C wird von allen zu berücksichtigenden Fraktionen gebildet wird, die bei einer Temperatur oberhalb von $(T_M/2)+7{,}5$°C eluiert werden und eine mittlere Molmasse Mn (Zahlenmittel) $< 120\,000$ g/mol aufweisen.

Bedingt durch die Verluste bei der TREF und dadurch, daß Fraktionen, die einem Anteil an der Propylenpolymerisat-Zusammensetzung von weniger als 1 Gew.-% haben, nicht weiter berücksichtigt werden, ist die Summe der experimentell erhaltene Mengen an Komponenten A, B und C geringer als die bei der Fraktionierung eingewogene Menge an Polymerisat, auf die bezogen wird. Da die Anteile der Komponenten A, B und C üblicherweise in Gew.-% angeben werden, ergibt sich somit für die Summe der Anteile der Komponenten A, B und C eine Differenz zu 100 Gew.-%, die man als Z bezeichnen und entsprechend der Formel

$$\mathtt{Z \;\; = \;\; 100 \; Gew.\text{-}\% \; - \; (A + B + C)}$$

quantifizieren kann, wobei A, B und C das Verhältnis der gefundenen Mengen der Komponenten A, B und C zu der eingewogenen Menge der Propylenpolymerisat-Zusammensetzung in Gew.-% bedeutet und Z ebenfalls in Gew.-% angegeben wird.

Zur Deutung der guten Eigenschaften der erfindungsgemäßen Propylenpolymerisat-Zusammensetzungen kann man annehmen, daß insbesondere ein hoher Gehalt an Hauptkomponente A eine hohe Steifigkeit der Folien bewirkt. Der Gehalt an Nebenkomponente B beeinflußt die Geschwindigkeit der Verarbeitung und der Gehalt an Nebenkomponente C ist für ein breites Temperaturfenster verantwortlich.

Eine weitere Größe zur Charakterisierung der erfindungsgemäßen Propylenpolymerisat-Zusammensetzungen ist der bei Raumtemperatur in Xylol lösliche Anteil $X_L$, unter dem der nach einem Verfahren analog der ISO-Norm 1873-1: 1991 bestimmte Anteile zu verstehen ist. Hierbei werden 5 g Polypropylen in 500 ml destilliertes Xylol, das zuvor auf 100°C erhitzt wurde, gegeben. Anschließend erhitzt man die Mischung auf den Siedepunkt des Xylols und hält 60 min bei dieser Temperatur. Daraufhin wird innerhalb von 20 min mit einem Kältebad auf 5°C abgekühlt und dann wieder auf 20°C erwärmt. Diese Temperatur wird für 30 min gehalten. Das ausgefallene Polymerisat filtriert man ab. Von dem Filtrat werden exakt 100 ml abgefüllt und das Lösungsmittel am Rotationsverdampfer entfernt. Der verbleibende Rückstand wird für ca. 2 h bei 80°C/250 mbar bis zur Gewichtskonstanz getrocknet und nach dem Erkalten ausgewogen.

Der xylollösliche Anteil ergibt sich aus

$$X_L = \frac{g \times 500 \times 100}{G \times V}$$

mit

$X_L$ = xylollöslicher Anteil in %,

g = gefundene Menge in g,

G = Produkteinwaage in g,

V = Volumen der eingesetzten Filtratmenge in ml.

Gemäß einer der Ausführungsformen der vorliegenden Erfindung lassen sich die erfindungsgemäßen teilkristallinen Propylenpolymerisat-Zusammensetzungen in

von 40 bis 85 Gew.-%, bevorzugt von 50 bis 80 Gew.-% und insbesondere von 55 bis 75 Gew.-% der Hauptkomponente A,

von 0 bis 55 Gew.-%, bevorzugt von 0 bis 30 Gew.-% und insbesondere von 5 bis 20 Gew.-% der Nebenkomponente B und

von 0 bis 55 Gew.-%, bevorzugt von 5 bis 40 Gew.-% und insbesondere von 10 bis 35 Gew.-% der Nebenkomponente C,

zerlegen, wobei mindestens eine der die Hauptkomponente A bildenden Fraktionen ein Verhältnis von Massenmittel ($M_w$) und Zahlenmittel ($M_n$) der Molmassen der Polymerisate $M_w/M_n > 4{,}5$, bevorzugt $> 5$ und insbesondere $> 6$ aufweist. Bevorzugt haben die die Hauptkomponente A bildenden Fraktionen, die ein Verhältnis $M_w/M_n > 4{,}5$ aufweisen, einen Anteil von mindestens 10 Gew.-%, insbesondere von mindestens 20 Gew.-% und ganz besonders bevorzugt von mindestens 30 Gew.-% an der Hauptkomponente A.

Die teilkristallinen Propylenpolymerisat-Zusammensetzungen gemäß dieser Ausführungsform weisen also eine breite Molmassenverteilung der hochisotaktischen Anteile aus. Sie zeichnen sich dadurch aus, daß gegenüber herkömmlichen, zur Herstellung von BOPP-Folien eingesetzten Polypropylenen beispielsweise verbesserte mechanische Eigenschaften der Folien und verbesserte Barriereeigenschaften erreicht werden, ohne daß es Nachteile in der Verarbeitbarkeit gibt.

Die teilkristallinen Propylenpolymerisat-Zusammensetzungen gemäß einer weiteren der Ausführungsformen der vorliegenden Erfindung lassen sich in

von 40 bis 85 Gew.-%, bevorzugt von 45 bis 75 Gew.-% und insbesondere von 50 bis 70 Gew.-% der Hauptkomponente A,

von 15 bis 55 Gew.-%, bevorzugt von 15 bis 45 Gew.-% und insbesondere von 20 bis 35 Gew.-% der Nebenkomponente B und

von 0 bis 40 Gew.-%, bevorzugt von 5 bis 35 Gew.-% und insbesondere von 5 bis 30 Gew.-% der Nebenkomponente C, zerlegen, wobei der bei Raumtemperatur in Xylol lösliche Anteil $X_L$ der teilkristallinen Propylenpolymerisat-Zusammensetzung kleiner oder gleich 5 Gew.-% und bevorzugt kleiner oder gleich 4 Gew.-% ist. Besonders bevorzugte Propylenpolymerisat-Zusammensetzungen gemäß dieser Ausführungsform weisen einen Anteil $X_L$ auf, der kleiner oder gleich 3 Gew.-% ist.

Die teilkristallinen Propylenpolymerisat-Zusammensetzungen gemäß dieser Ausführungsform haben einen relativ hohen Gehalt an niedertaktischen Anteilen, die bei einer Temperatur $(T_M/2)+7{,}5°C$ jedoch nicht bei Raumtemperatur in Xylol löslich sind und niedrige bei Raumtemperatur in Xylol lösliche Anteile. Sie zeichnen sich dadurch aus, daß sie gegenüber herkömmlichen, zur Herstellung von BOPP-Folien eingesetzten Polypropylenen eine verbesserte Verarbeitbarkeit aufweisen, was sich in einem verbreiterten Temperaturverarbeitungsfenster und einem verbreiterten Geschwindigkeitsverarbeitungsfenster widerspiegelt, und die optischen Eigenschaften der Folien verbessert sind, ohne daß Nachteile in den mechanischen Eigenschaften der Folien auftreten.

Wesentlich für die Eigenschaften der erfindungsgemäßen Propylenpolymerisat-Zusammensetzungen ist deren Anteil an den Komponenten A, B und C. Das Verfahren, nach dem die jeweiligen Mischungen unterschiedlicher Polymerketten hergestellt wurden, ist an sich nicht kritisch.

Beispielsweise ist es möglich, zwei oder mehrere Ausgangspolymerisate getrennt zu polymerisieren und diese dann mit geeigneten Mischeinrichtungen wie Schnecken- oder Scheibenextrudern, Knetern oder Walzwerken zu mischen.

Vorzugsweise werden die Propylenpolymerisat-Zusammensetzungen jedoch nicht getrennt polymerisiert. Eine Möglichkeit besteht dann darin, daß eine Mischung von zwei oder mehreren verschiedenen Katalysatoren eingesetzt wird, die unter den eingestellten Polymerisationsbedingungen unterschiedliche Polypropylene liefern, oder es wird ein Katalysator verwendet der von sich aus so unterschiedliche aktive Zentren besitzt, daß er als solcher entsprechende Mischungen von Polymerketten liefert. Eine andere Möglichkeit ist, unter so unterschiedlichen Bedingungen in verschiedenen Reaktoren, beispielsweise einer Reaktorkaskade, zu polymerisieren, daß letztendlich die gewünschte Zusammensetzung resultiert.

Die Herstellung der Bestandteile der erfindungsgemäßen Propylenpolymerisat-Zusammensetzung oder der gesamten Propylenpolymerisat-Zusammensetzung kann in bekannter Weise in Masse, in Suspension oder in der Gasphase in den üblichen, für die Polymerisation von Propylen verwendeten Reaktoren entweder absatzweise oder bevorzugt kontinuierlich, ein- oder mehrstufig erfolgen. In der Regel werden die Polymerisationen bei Temperaturen im Bereich von 20 bis 150°C und Drücken im Bereich von 1 bis 100 bar mit mittleren Verweilzeiten von 0,5 bis 5 Stunden durchgeführt. Bevorzugt sind dabei Temperaturen von 60 bis 90°C, Drücke von 20 bis 35 bar und mittlere Verweilzeiten von 0,5 bis 3 Stunden.

Hierbei kommen insbesondere in der Polymerisationstechnik übliche Ziegler-Natta-Katalysatorsysteme zum Einsatz. Diese bestehen in der Regel aus einer titanhaltigen Feststoffkomponente, für deren Herstellung neben Titanverbindungen häufig auch anorganische oder polymere feinteilige Träger, Verbindungen des Magnesiums, Halogenverbindungen und Elektronendonorverbindungen eingesetzt werden, und mindestens einem Cokatalysator. Als Cokatalysatoren kommen Aluminiumverbindungen in Betracht. Vorzugsweise werden neben einer Aluminiumverbindung als weitere Cokatalysatoren noch eine oder mehrere Elektronendonorverbindungen eingesetzt.

Zur Herstellung der Propylenpolymerisate können auch Katalysatorsysteme auf Basis von Metallocenverbindungen verwendet werden. Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben.

Üblicherweise eingesetzte Metallocene enthalten als Zentralatome Titan, Hafnium oder bevorzugt Zirkonium, wobei im Allgemeinen das Zentralatom über eine $\pi$-Bindung an mindestens eine, in der Regel substituierte Cyclopentadienylgruppe gebunden ist. Die Metallocenkomplexe liegen in den Katalysatorsystemen häufig geträgert vor. Weiterhin enthalten die Metallocen-Katalysatorsysteme als metalloceniumionenbildende Verbindungen üblicherweise Alumoxanverbindungen oder starke, neutrale Lewissäuren, ionische Verbindungen mit lewissauren Kationen oder ionische Verbindungen mit Brönsted-Säuren als Kation.

Die erfindungsgemäße teilkristalline Propylenpolymerisat-Zusammensetzung weist vorzugsweise Molmassen (Gewichtsmittel $M_w$) zwischen 50 000 und 800 000 g/mol auf. Ihre Schmelze-Fließraten, bei 230°C und unter einem Gewicht von 2,16 kg nach ISO 1133, liegen im Bereich von 0,1 bis 100 g/10 min, vorzugsweise im Bereich von 0,5 bis 50 g/10 min und insbesondere im Bereich von 1 bis 10 g/10 min.

Üblicherweise werden der erfindungsgemäßen teilkristallinen Propylenpolymerisat-Zusammensetzung vor der Anwendung übliche Additive wie Stabilisatoren, Gleit- und Entformungsmittel, Füllstoffe, Nukleierungsmittel, Antistatika, Weichmacher, Farbstoffe, Pigmente oder Flammschutzmittel in üblichen Mengen zugesetzt. In der Regel werden diese bei der Granulierung des pulverförmig anfallenden Polymerisationsprodukts in das Polymerisat eingearbeitet.

Übliche Stabilisatoren sind Antioxidantien wie sterisch gehinderte Phenole, Verarbeitungsstabilisatoren wie Phosphite oder Phosphonite, Säurefänger wie Calcium- oder Zinkstearat oder Dihydrotalcit, sterisch gehinderte Amine oder auch UV-Stabilisatoren. Im allgemeinen enthält die erfindungsgemäße Propylenpolymerisat-Zusammensetzung einen oder mehrere der Stabilisatoren in Mengen bis zu 2 Gew.-%.

Geeignete Gleit- und Entformungsmittel sind beispielsweise Fettsäuren, Calcium- oder Zinksalze der Fettsäuren, Fettsäureamide oder niedermolekulare Polyolefinwachse, die üblicherweise in Konzentrationen bis 2 Gew-% eingesetzt werden.

Als Füllstoffe für die Propylenpolymerisat-Zusammensetzung kommen z.B. Talkum, Kreide oder Glasfasern in Betracht, wobei hier Mengen bis 50 Gew.-% verwendet werden können.

Geeignete Nukleierungsmittel sind beispielsweise anorganische Zusatzstoffe wie Talkum, Kieselsäure oder Kaolin, Salze von Mono- oder Polycarbonsäuren wie Natriumbenzoat oder Aluminium-tert.-butylbenzoat, Dibenzylidensorbitol oder dessen $C_1$-$C_8$-alkylsubstituierte Derivate wie Methyl- oder Dimethyldibenzylidensorbitol oder Salze von Diestern der Phosphorsäure wie Natrium-2,2'-methylenbis (4,6,-di-tert.-butylphenyl)phosphat. Der Gehalt der Propylenpolymerisat-Zusammensetzung an Nukleierungsmitteln beträgt in der Regel bis 5 Gew.-%.

Solche Additive sind in der Regel handelsüblich und werden beispielsweise in Gächter/Müller, Plastics Additives Handbook, 4th Edition, Hansa Publishers, Munich, 1993 beschrieben.

Aufgrund der guten anwendungstechnischen Eigenschaften eignen sich die erfindungsgemäßen teilkristallinen Propylenpolymerisat-Zusammensetzungen vor allem zur Herstellung von Folien, Fasern oder Formkörpern und insbesondere zur Herstellung von biaxial gereckte Folien.

Ein weiterer Gegenstand der Erfindung sind aus den erfindungsgemäßen teilkristallinen Propylenpolymerisat-Zusammensetzungen hergestellte biaxial gereckte Folien mit einem Reckverhältnis von mindestens 1:3 in der Längsrichtung und von mindesten 1:5 in der Querrichtung.

Die Herstellung der biaxial gereckten Folien kann durch Schmelzeextrusion der Propylenpolymerisat-Zusammensetzung erfolgen, wobei die ausgetragene Schmelze zunächst auf eine Temperatur von 100 bis 20°C abgekühlt wird, um sie zu verfestigen, und der verfestigte Film dann in der Längsrichtung bei einer Temperatur von 80 bis 150°C mit einem Reckverhältnis von mindestens 1:3 und in der Querrichtung bei einer Temperatur von 120 bis 170°C mit einem Reckverhältnis von mindestens 1:5 gereckt wird.

Hierzu schmilzt man die teilkristalline Propylenpolymerisat-Zusammensetzungen bei Temperaturen von beispielsweise 220 bis 300°C, bevorzugt von 240 bis 280°C, in einem Extruder auf, wobei im Extruder weitere Additive oder Polymerisate zugegeben werden können, und extrudiert die Schmelze durch eine Flachdüse oder eine ringförmige Düse.

Zur Verfestigung wird die erhaltene Folie dann abgekühlt. Bei einer Extrusion durch eine Flachdüse (Breitschlitzdüse) erfolgt die Kühlung in der Regel durch eine oder mehrere Abzugswalzen, die eine Oberflächentemperatur von beispielsweise 10 bis 100°C, vorzugsweise 15 bis 70°C, haben. Bei Einsatz einer ringförmigen Düse wird zum Kühlen des Folienschlauchs meist Luft oder Wasser mit einer Temperatur von 0 bis 40°C eingesetzt.

Die erhaltene Folie wird anschließend längs und quer zur Extrusionsrichtung gereckt, was zu einer Orientierung der Molekülketten führt. Die Reihenfolge des Reckens ist nicht kritisch. Bei der Breitschlitzextrusion wird in der Regel zunächst die Längsreckung mit Hilfe von mehreren, entsprechend dem angestrebten Reckverhältnis unterschiedlich schnell laufenden Walzenpaaren durchgeführt. Anschließend erfolgt die Querreckung mittels einer entsprechenden Kluppenvorrichtung. Ebenso kann die Längs- und Querreckung mittels einer geeigneten Kluppenvorrichtung simultan erfolgen. Beim Einsatz einer ringförmigen Düse erfolgt das Recken in der Regel simultan in beide Richtungen durch Einblasen von Gas in den Folienschlauch.

Vor dem Recken ist es möglich, die Folie auf eine Temperatur von beispielsweise 60 bis 110°C vorzuheizen. Vorzugsweise erfolgt die Längsreckung bei einer Temperatur von 80 bis 150°C, insbesondere 100 bis 130°C, und die Querreckung bei einer Temperatur von 120 bis 190°C, insbesondere 145 bis 180°C. Das Längsreckverhältnis beträgt in der Regel mindestens 1:3, vorzugsweise von 1:4 bis 1:7 und insbesondere von 1:4,5 bis 1:5. Das Querreckverhältnis beträgt in der Regel mindestens 1:5, vorzugsweise von 1:6 bis 1:12 und insbesondere von 1:7 bis 1:10.

An die biaxiale Reckung kann sich eine Wämebehandlung zur Thermofixierung anschließen, bei der die Folie etwa 0,1 bis 10 s bei einer Temperatur von 100 bis 160°C gehalten wird. Anschließend wird die Folie in üblicher Weise von einer Aufwickeleinrichtung aufgewickelt.

Während oder nach der Herstellung der BOPP-Folie können eine oder beide Oberflächen nach einer der bekannten Methoden corona- oder flammbehandelt werden oder bei Bedarf mit einem Metall wie Aluminium bedampft werden.

Es ist auch möglich, daß die erfindungsgemäße teilkristalline Propylenpolymerisat-Zusammensetzung nur eine oder nur einige Schichten einer mehrschichtig aufgebauten biaxial gereckten Folien bilden.

Die aus der erfindungsgemäßen teilkristallinen Propylenpolymerisat-Zusammensetzungen hergestellten biaxial gereckten Folien sind insbesondere hervorragend in der Steifigkeit, der Barrierewirkung und der Transparenz.

Beispiele

Zur Charakterisierung der Proben wurden folgende Prüfungen durchgeführt:

Bestimmung des mittleren Teilchendurchmessers:

Zur Bestimmung des mittleren Teilchendurchmessers des Kieselgels wurde durch Coulter-Counter-Analyse nach ASTM Standard D 4438 die Korngrößenverteilung der Kieselgelpartikel ermittelt und daraus der volumenbezogene Mittelwert (Medianwert) berechnet.

Bestimmung des Porenvolumens:

Durch Quecksilber-Porosimetrie nach DIN 66133

Bestimmung der spezifischen Oberfläche:

Durch Stickstoff-Adsorption nach DIN 66131

Bestimmung des Wassergehalts:

Zur Bestimmung des Wassergehalts wurden 5 g Kieselgel bei 160°C unter Normaldruck 15 min getrocknet (Gewichtskonstanz). Die Gewichtsabnahme entspricht dem ursprünglichen Wassergehalt.

Bestimmung des Ethylen-Gehalts:

Der Ethylen-Gehalt wurden durch $^{13}$C-NMR-Spektroskopie an Polymergranulat bestimmt.

Bestimmung des Schmelze-Fließrate (MFR):

nach ISO-Norm 1133, bei 230°C und unter einem Gewicht von 2,16 kg.

Bestimmung von $T_M$:

Die Schmelztemperatur $T_M$ wurde durch DSC-Messung nach ISO-Norm 3146 mit einem ersten Aufheizen mit einer Aufheizrate von 20°C pro Minute bis 200°C, einer dynamische Kristallisation mit einer Kühlrate von 20°C pro Minute bis 25°C und einem zweiten Aufheizen mit einer Aufheizrate von 20°C pro Minute wiederum bis 200°C ermittelt. Die Schmelztemperatur TM ist dann die Temperatur, bei der die beim zweiten Aufheizen gemessene Kurve der Enthalpie gegen die Temperatur das Maximum aufweist.

Fraktionierung durch TREF:

Als Lösungsmittel wurde ein technisches Xylol mit weniger als 0,1 Gew.-% nichtflüchtiger Anteile verwendet, dem zur Stabilisierung 5 Gramm pro Liter 2,6-Di-tert.butyl-4-methylphenol zugesetzt wurde. Für jede Fraktionierungg wurden 5 g der Propylenpolymerisat-Zusammensetzung in 400 ml siedendem Xylol gelöst und die Lösung dann linear mit einer Kühlrate von 10°C/h auf 25°C abgekühlt, wobei der Großteil des Polymerisats ausfiel.

Die Kristallsuspension wurde in die in Fig. 1 gezeigte, 500 ml fassende, temperierbare Extraktionsapparatur überführt und auf auf die erste Elutionstemperatur, d.h. die Temperatur $(T_M/2)+7,5$°C, erwärmt. Vor der Messung wurde die gesamte Apparatur mit Stickstoff gespült. Während der Extraktion blieb der Gasraum oberhalb der Extraktionsflüssigkeiten mit Stickstoff überschichtet. Die Polypropylenkristalle wurden bei dieser Temperatur unter heftiger Durchmischung 15 Minuten extrahiert. Anschließend wurde die Polymerlösung abgelassen, während die Polypropylenkristalle im Extraktor zurückblieben. Das gelöste Polymer wurde in kaltem Aceton (Temperatur < 0°C) ausgefällt, abfiltriert und 4 bis 5 Stunden bei 100°C im Vakuum getrocknet.

Der Extraktor wurde nun auf die nächste Elutionstemperatur der Temperaturfolge 70°C, 75°C, 80°C, 85°C, 90°C, 94°C, 98°C, 102°C, 107°C, 112°C, 117°C, 122°C erwärmt und es wurden 400 ml Xylol der selben Temperatur hinzugegeben. Es wurde wiederum 15 Minuten unter heftiger Durchmischung extrahiert, die Polymerlösung abgelassen, das gelöste Polymer in kaltem Aceton ausgefällt, abfiltriert und getrocknet. Diese Schritte wurden so lange wiederholt, bis sich das gesamte Propylenhomopolymerisat gelöst hatte.

Die errechneten Anteile der TREF-Fraktionen beschreiben den Anteil, der sich bei der Extraktion bei der angegebenen Temperatur gelöst hat. Die Gew.-%-Angaben beziehen sich hierbei auf die Einwaage von 5 g, d.h. bedingt durch Wäge- und Filtrationsverluste ergibt die Summe der Fraktionen jeweils nicht ganz 100 Gew-%.

Gelpermeationschromatographie (GPC):

Die Gelpermeationschromatographie (GPC) bei 145°C wurde bei 145°C in 1,2,4-Trichlorbenzol durchgeführt, wobei eine GPC-Apparatur 150C der Fa. Waters zum Einsatz kam. Die Auswertung der Daten erfolgte mit der Software Win-GPC der Fa. HS-Entwicklungsgesellschaft für wissenschaftliche Hard- und Software mbH, Ober-Hilbersheim. Die Kalibrierung der Säulen erfolgte mittels Polypropylenstandards mit Molmassen von 100 bis $10^7$ g/mol.

Es wurden Massenmittel ($M_w$) und Zahlenmittel ($M_n$) der Molmassen der Polymerisate bestimmt. Der Q-Wert ist das Verhältnis von Massenmittel ($M_w$) zu Zahlenmittel ($M_n$).

Bestimmung des Anteile der Komponenten A, B und C:

Mit der zu untersuchenden Propylenpolymerisat-Zusammensetzung wurde eine TREF-Analyse durchgeführt. Bei der weiteren Auswertung wurden alle diejenigen Fraktionen berücksichtigt, deren Massenanteil mehr als 1 Gew.-% betrug. Von allen zu berücksichtigenden Fraktionen wurde die Molmassenverteilung mittels GPC bestimmt.

Der Masseanteil der Nebenkomponente B ist der Masseanteil der Fraktion, die bei der ersten Elutionstemperatur, d.h. der Temperatur $(T_M/2)+7,5$°C, erhalten wurde.

Der Masseanteil der Hauptkomponente A ist der Masseanteil aller bei höheren Elutionstemperaturen erhaltenen Fraktionen, deren mittlere Molmasse $M_n$ (Zahlenmittel) $\geq$ 120 000 g/mol war.

Die bei höheren Temperaturen als $(T_M/2)+7{,}5°C$ erhaltenen Fraktionen mit einer mittleren Molmasse $M_n$ (Zahlenmittel) < 120 000 g/mol bilden zusammen die Nebenkomponente C.

Die Differenz Z quantifiziert gemäß der Formel

$$Z \quad = \quad 100 \text{ Gew.-\%} - (A + B + C)$$

die Anteile der eingewogenen Propylenpolymerisat-Zusammensetzung, die aufgrund der Verluste bei der TREF oder der zu geringen Mengen einzelner Fraktionen nicht bei der Berechnung der Komponenten A, B und C berücksichtigt wurden.

Bestimmung des Verarbeitungsfensters:

Während der Herstellung der BOPP-Folien wurde durch Variation der Recktemperatur der Temperaturbereich festgestellt, innerhalb dem es möglich ist, BOPP-Folien zu erhalten. Dieser Temperaturbereich ist dadurch begrenzt, daß bei höheren Temperaturen aufgrund von Schmelzen der Film reißt und bei niedrigeren Temperaturen aufgrund von Inhomogenitäten wegen unvollständigem Aufschmelzen der Film reißt oder der Film so fest ist, daß er aus der Verstreckvorrichtung rutscht.

Es wurde so vorgegangen, daß mit einer Verarbeitungstemperatur, bei der ein stabiler Lauf gewährleistet war, begonnen wurde. Dann wurde die Recktemperatur in Schritten von 2°C angehoben bis der Film riß. Dabei wurde die nächste Temperatur dann eingestellt, wenn bei einer Temperatur 1000 m Folie ohne Riß produziert werden konnten. Anschließend wurde wiederum mit der Ausgangstemperatur begonnen und die Recktemperatur in Schritten von 2°C abgesenkt bis der Film erneut riß oder aus der Verstreckvorrichtung rutschte.

Bestimmung maximalen Abzugsgeschwindigkeit:

Während der Herstellung der BOPP-Folien wurde durch Variation der Abzugsgeschwindigkeit der Bereich festgestellt, innerhalb dem es möglich ist, BOPP-Folien zu erhalten. Dieser Bereich ist dadurch begrenzt, daß bei höheren Geschwindigkeiten aufgrund von Inhomogenitäten oder zu hohen Zugkräften der Film reißt.

Es wurde so vorgegangen, daß bei einer Abzugsgeschwindigkeit, bei der ein stabiler Lauf gewährleistet war (hier: Recktemperatur 160°C) begonnen wurde. Dann wurde die Abzugsgeschwindigkeit in 25 m/min-Schritten erhöht, bis der Film riß. Dabei wurde die nächste Geschwindigkeit dann eingestellt, wenn bei einer Geschwindigkeit 1000 m Folie ohne Riß produziert werden konnte.

Bestimmung des Elastizitätsmoduls (Zug-E-Modul):

Aus biaxial gereckten Folien wurden in Längs- und in Querrichtung Streifen mit 15 mm Breite geschnitten, an denen nach ISO-Norm 527-2 bei 23°C Meßtemperatur der Zug-E-Modul bestimmt wurde.

Die Bestimmung der Trübung (Haze):

Nach ASTM D-1003.

Die Bestimmung der Wasserdampfbarriereeigenschaften

Messung der $H_2O$-Permeabilität nach DIN 53122.

Die Bestimmung der Sauerstoffbarriereeigenschaften

Messung der 02-Permeabilität nach ASTM D3985-81.

Beispiel 1

a) Herstellung einer titanhaltigen Feststoffkomponente

Ein durch Sprühtrocknung hergestelltes, feinteiliges, sphärisches Kieselgel, das einen mittleren Teilchendurchmesser von 45 $\mu$m, ein Porenvolumen von 1,5 cm$^3$/g, eine spezifische Oberfläche von 260 m$^2$/g und einen Wassergehalt von 2,7 Gew.-% aufwies, wurde mit einer Lösung von n-Butyloctylmagnesium in n-Heptan versetzt, wobei pro Mol SiO$_2$ 0,3 mol der Magnesiumverbindung eingesetzt wurden. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt

3,5 Gew.-% Ti

7,4 Gew.-% Mg

28,2 Gew.-% Cl.

b) Polymerisation

Die Polymerisation wurde in einer kontinuierlich betriebenen Kaskade aus zwei hintereinander geschalteten vertikal gerührten Gasphasenreaktoren mit einem Nutzvolumen von jeweils 200 l durchgeführt, wobei beide Reaktoren ein bewegtes Festbett aus feinteiligem Polymerisat enthielten. Es wurde ein Katalysatorsystem aus der in Beispiel 1 a) hergestellten titanhaltigen Feststoffkomponente sowie als weiteren Komponenten Triethylaluminium und Dicyclopentyldimethoxysilan verwendet.

In den ersten Gasphasenreaktor wurden gasförmiges Propylen, die titanhaltige Feststoffkomponente sowie Triethylaluminium und Dicyclopentyldimethoxysilan eingeleitet. Hierbei wurden die Menge an zugegebenem Triethylaluminium auf 210 mmol pro g titanhaltiger Feststoffkomponente und die Menge an Dicyclopentyldimethoxysilan auf 0,02 mol pro Mol Triethylaluminium eingestellt. Auf die Zugabe von Wasserstoff als Molmassenregler wurde vollständig verzichtet. Die Polymerisation erfolgte bei einem Druck von 28 bar und einer Temperatur von 80°C.

Das im ersten Gasphasenreaktor erhaltene Propylenhomopolymerisat wurde zusammen mit noch aktiven Katalysatorbestandteilen in den zweiten Gasphasenreaktor übergeführt, wobei dort bei einem Druck von 20 bar und einer Temperatur von 70°C weiter polymerisiert wurde. In den zweiten Reaktor wurde soviel Wasserstoff eingeleitet, daß im Gasraum ein stationärer Anteil von 11 Vol.-% Wasserstoff vorhanden war. Hierbei wurde in Abständen von fünf Minuten die Gaszusammensetzung mittels eines Gaschromatographen bestimmt und durch Nachführen der Dosiermengen die Gaszusammensetzung geregelt. Weiterhin wurde im zweiten Reaktor nochmals Dicyclopentyldimethoxysilan zugegeben, und zwar so viel, daß das die insgesamt zugegebene Menge an Dicyclopentyldimethoxysilan 0,1 mol pro Mol Triethylaluminium betrug.

Der Ausstoß der Reaktorkaskade wurde über die Menge der zudosierten titanhaltigen Feststoffkomponente auf 48 kg/h eingestellt. Die Produktivität betrug 13 300 g Polymerisat pro g titanhaltiger Feststoffkomponente.

Bei der Granulierung wurden eine für Propylenpolymerisate übliche Stabilisierung auf Basis von Tetrakis[methylen-(3,5-di-tert.-butylhydroxyhydrocinnamat)]methan und Tris(2,4-di-tert.-butylphenyl)phosphit eingearbeitet. Die erhaltene Propylenpolymerisat-Zusammensetzung besaß eine Schmelztemperatur von 165°C, eine Schmelze-Fließrate von 2,1 g/10 min und einen bei Raumtemperatur in Xylol löslichen Anteil von 3,1 Gew.-%. Durch TREF wurde es in die in Tabelle 1 wiedergegebenen Fraktionen zerlegt. Die Ausbeute der Fraktionierung, d.h. die Summe der Massenanteile der Fraktionen betrug 99,5 Gew-%.

Tabelle 1

| Fraktion | Elutionstemperatur [°C] | Massenanteil [Gew.-%] | mittlere Molmasse der Fraktion (Zahlenmittel $M_n$) [g/mol] | $M_w/M_n$ |
|---|---|---|---|---|
| 1 | 90 | 7,3 | 13800 | 5,6 |
| 2 | 94 | 2,0 | 17800 | 2,3 |
| 3 | 98 | 3,6 | 22900 | 2,0 |

Tabelle fortgesetzt

| Fraktion | Elutionstemperatur [°C] | Massenanteil [Gew.-%] | mittlere Molmasse der Fraktion (Zahlenmittel $M_n$) [g/mol] | $M_w/M_n$ |
|---|---|---|---|---|
| 4 | 102 | 8,9 | 36000 | 2,3 |
| 5 | 107 | 14,7 | 49300 | 2,4 |
| 6 | 112 | 37,7 | 144300 | 4,7 |
| 7 | 117 | 13,6 | 126300 | 6,2 |
| 8 | 122 | 8,8 | 247800 | 3,5 |
| 9 | 125 | 2,9 | 272300 | 3,6 |

Da die Temperatur $(T_M/2)+7,5°C$ der untersuchten Propylenpolymerisat-Zusammensetzung 90°C betrug, wurde die erste Fraktion bei 90°C eluiert. Die Fraktionen 2 - 5 bei den Temperaturen 94, 98, 102 und 107°C bilden zusammen die der Komponente C und die Fraktionen 6 - 9 bei den Temperaturen bei 112, 117, 122 und 125°C die Komponente A. Es ergab sich also eine Zusammensetzung aus

| | | |
|---|---|---|
| Hauptkomponente A: | 63,0 | Gew.-% |
| Nebenkomponente B: | 7,3 | Gew.-% und |
| Nebenkomponente C: | 29,2 | Gew.-%. |

Die Differenz Z betrug somit 0,5 Gew.-%.

c) Herstellung einer BOPP-Folie

Aus der erhaltenen teilkristallinen Propylenpolymerisat-Zusammensetzung wurde eine biaxial gereckten Folie mit ca. 20 $\mu$m Dicke hergestellt. Die Herstellung erfolgte mit einer Pilotanlage der Fa. Brückner Maschinenbau mit einer 1,3 m-Breitschlitzdüse. Es wurde mit einem Durchsatz von 150 kg/h gearbeitet. Die extrudierte Folie wurde auf eine Temperatur von 40°C abgekühlt und die verfestigte Folie in der Längsrichtung bei einer Temperatur von 116°C und einem Reckverhältnis von 4,5:1 und in der Querrichtung bei einer Temperatur von 157°C und einem Reckverhältnis von 8:1 gereckt. Die Eigenschaften der hergestellten biaxial gereckten Folie können der nachfolgenden Tabelle 3 entnommen werden.

Beispiel 2

a) Herstellung einer titanhaltigen Feststoffkomponente

Es wurde der in Beispiel 1 a) hergestellte Katalysatorfeststoff verwendet.

b) Polymerisation

Die Polymerisation erfolgt in der auch in Beispiel 1 b) verwendeten Reaktorkaskade mit einem Katalysatorsystem aus der in Beispiel 1 a) hergestellten titanhaltigen Feststoffkomponente sowie als weiteren Komponenten Triethylaluminium und Dicyclopentyldimethoxysilan.

In den ersten Gasphasenreaktor wurden gasförmiges Propylen, die titanhaltige Feststoffkomponente sowie Triethylaluminium und Dicyclopentyldimethoxysilan eingeleitet. Hierbei wurde die Menge an zugegebenem Triethylaluminium auf 210 mmol pro g titanhaltiger Feststoffkomponente und die Menge an Dicyclopentyldimethoxysilan auf 0,1 mol pro Mol Triethylaluminium eingestellt. Auf die Zugabe von Wasserstoff als Molmassenregler wurde vollständig verzichtet. Die Polymerisation erfolgte bei einem Druck von 28 bar und einer Temperatur von 80°C.

Das im ersten Gasphasenreaktor erhaltene Propylenhomopolymerisat wurde zusammen mit noch aktiven Katalysatorbestandteilen in den zweiten Gasphasenreaktor übergeführt, wobei dort bei einem Druck von 20 bar und einer Temperatur von 70°C kontinuierlich ein Gemisch aus Propylen und Ethylen hinzupolymerisiert wurde. Weiterhin erfolgte die Polymerisation im zweiten Reaktor in Gegenwart von Wasserstoff. Es wurden soviel Ethylen und Wasserstoff eingeleitet, daß im Gasraum ein stationärer Anteil von 3 Vol.-% Ethylen und 17 Vol.-% Wasserstoff vorhanden war. Hierzu wurde in Abständen von fünf Minuten die Gaszusammensetzung mittels eines Gaschromatographen bestimmt und durch Nachführen der Dosiermengen die Gaszusammensetzung geregelt.

Der Ausstoß der Reaktorkaskade wurde über die Menge der zudosierten titanhaltigen Feststoffkomponente auf 44 kg/h eingestellt. Die Produktivität betrug 17 400 g Polymerisat pro g titanhaltiger Feststoffkomponente.

Bei der Granulierung wurden eine für Propylenpolymerisate übliche Stabilisierung auf Basis von Tetrakis[methylen(3,5-di-tert.-butylhydroxyhydrocinnamat)]methan und Tris (2,4-di-tert.-butylphenyl)phosphit eingearbeitet. Die erhaltene Propylenpolymerisat-Zusammensetzung besaß eine Schmelztemperatur von 163,2°C, eine Schmelze-Fließrate von 2,2 g/10 min und einen bei Raumtemperatur in Xylol löslichen Anteil von 3,4 Gew.-%. Der Ethylen-Gehalt lag bei 1,5 Gew.-%. Durch TREF wurde es in Fraktionen zerlegt. Die Ausbeute der Fraktionierung lag bei 97,2 Gew-%.

Es ergab sich eine Zusammensetzung aus

| | | |
|---|---|---|
| Hauptkomponente A: | 60,7 | Gew.-% |
| Nebenkomponente B: | 28,2 | Gew.-% und |
| Nebenkomponente C: | 8,3 | Gew.-%. |

Die Differenz Z betrug somit 2,8 Gew.-%.

Das maximale Verhältnis $M_w/M_n$ der die Komponente A bildenden Fraktionen lag bei 3,7.

c) Herstellung einer BOPP-Folie

Aus der erhaltenen teilkristallinen Propylenpolymerisat-Zusammensetzung wurde eine biaxial gereckten Folie mit ca. 20 $\mu$m Dicke hergestellt. Die Herstellung erfolgte mit einer Pilotanlage der Fa. Brückner Maschinenbau mit einer 1,3 m-Breitschlitzdüse. Es wurde mit einem Durchsatz von 150 kg/h gearbeitet. Die extrudierte Folie wurde auf eine Temperatur von 40°C abgekühlt und die verfestigte Folie in der Längsrichtung bei einer Temperatur von 116°C und einem Reckverhältnis von 4,5:1 und in der Querrichtung bei einer Temperatur von 157°C und einem Reckverhältnis von 8:1 gereckt. Die Eigenschaften der hergestellten biaxial gereckten Folie können der nachfolgenden Tabelle 3 entnommen werden.

Vergleichsbeispiel A

Mit einem Propylenhomopolymerisat, das kommerziell zur OPP-Folienherstellung eingesetzt wird (Novolen® 1104 K der Targor GmbH), wurde wie in Beispiel 1 eine biaxial gereckte Folie mit ca. 20 $\mu$m Dicke hergestellt.

An dem eingesetzten Novolen® 1104 K wurde eine Schmelztemperatur von 165,5°C, eine Schmelze-Fließrate von 3,2 g/10 min und ein bei Raumtemperatur in Xylol löslicher Anteil von 3,2 Gew.-% bestimmt. Durch TREF wurde es in die in Tabelle 2 wiedergegebenen Fraktionen zerlegt. Die Ausbeute der Fraktionierung betrug 96,7 Gew-%.

Tabelle 2

| Fraktion | Elutionstemperatur [°C] | Massenanteil [Gew.-%] | mittlere Molmasse der Fraktion (Zahlenmittel $M_N$) [g/mol] | $M_w/M_n$ |
|---|---|---|---|---|
| 1 | 90,25 | 4,6 | 27200 | 3,4 |
| 2 | 94 | 1,6 | 38900 | 2,1 |
| 3 | 98 | 2,6 | 39400 | 1,9 |
| 4 | 102 | 3,9 | 46300 | 1,7 |
| 5 | 107 | 9,3 | 66300 | 1,9 |
| 6 | 112 | 48,7 | 156600 | 2,6 |
| 7 | 117 | 25,3 | 185900 | 2,6 |
| 8 | 122 | 0,7 | - | - |

Da die Temperatur $(T_M/2)+7,5°C$ der untersuchten Propylenpolymerisat-Zusammensetzung 90,25°C betrug, wurde die erste Fraktion bei dieser Temperatur eluiert. Die Fraktionen 2 - 5 bei den Temperaturen 94, 98, 102 und 107°C bilden zusammen die der Komponente C und die Fraktionen 6 und 7 bei den Temperaturen bei 112 und 117 die Komponente A. Der Masseanteil der Fraktion 8 lag unter 1 Gew.-%. Diese Fraktion ist somit Z zuzuordnen. Es ergab sich also eine Zusammensetzung aus

| Hauptkomponente A: | 74,0 | Gew.-% |
| Nebenkomponente B: | 4,6 | Gew.-% und |
| Nebenkomponente C: | 17,4 | Gew.-%. |

Die Differenz Z betrug somit 4,0 Gew.-%.

Die Folieneigenschaften können der nachfolgenden Tabelle 3 entnommen werden.

Vergleichsbeispiel B

Mit einem Propylenhomopolymerisat, das kommerziell zur OPP-Folienherstellung eingesetzt wird (Novolen® NQ 10134 der Targor GmbH), wurde wie in Beispiel 1 eine biaxial gereckte Folie mit ca. 20 $\mu$m Dicke hergestellt.

An dem eingesetzten Novolen® NQ 10134 wurde eine Schmelztemperatur von 163,1°C, eine Schmelze-Fließrate von 3,4 g/10 min und ein bei Raumtemperatur in Xylol löslicher Anteil von 3,5 Gew.-% bestimmt. Durch TREF wurde es in Fraktionen zerlegt. Die Ausbeute der Fraktionierung lag bei 97,2 Gew.-%.

Es ergab sich eine Zusammensetzung aus

| Hauptkomponente A: | 67,0 | Gew.-% |
| Nebenkomponente B: | 8,2 | Gew.-% und |
| Nebenkomponente C: | 22,0 | Gew.-%. |

Die Differenz Z betrug somit 2,8 Gew.-%.

Das maximale Verhältnis $M_w/M_n$ der die Komponente A bildenden Fraktionen lag bei 2,5.

Vergleichsbeispiel C

Mit einem einem statistisch aufgebauten Propylen-EthylenCopolymerisat, das kommerziell zur OPP-Folienherstellung eingesetzt wird (Novolen® NX 10094 der Targor GmbH), wurde wie in Beispiel 1 eine biaxial gereckte Folie mit ca. 20 $\mu$m Dicke hergestellt.

An dem eingesetzten Novolen® NX 10094 wurde eine Schmelztemperatur von 155,7°C, eine Schmelze-Fließrate von 2,9 g/10 min, ein bei Raumtemperatur in Xylol löslicher Anteil von 1,7 Gew.-% und ein Ethylen-Gehalt von 1,1 Gew.-% bestimmt. Durch TREF wurde es in die Fraktionen zerlegt. Die Ausbeute der Fraktionierung lag bei 99,7 Gew.-%.

Es ergab sich eine Zusammensetzung aus

| Hauptkomponente A: | 88,2 | Gew.-% |
| Nebenkomponente B: | 7,7 | Gew.-% und |
| Nebenkomponente C: | 3,8 | Gew.-%. |

Die Differenz Z betrug somit 0,3 Gew.-%.

Das maximale Verhältnis $M_w/M_n$ der die Komponente A bildenden Fraktionen lag bei 2,8.

In der nachstehenden Tabelle 3 sind die Eigenschaften der biaxial gereckten Folien zusammengestellt, die aus den beispielhaft hergestellten teilkristallinen Propylenpolymerisat-Zusammensetzungen gefertigt wurden.

Tabelle 3

| | Beispiel 1 | Beispiel 2 | Vergl. beisp. A | Vergl. beisp. B | Vergl. beisp. C |
|---|---|---|---|---|---|
| Verarbeitungsfenster [°C] | 11 | 18 | 12 | 11 | 13 |
| maximale Abzugsgeschwindigkeit [m/min] | 100 | >200 | 100 | 150 | 100 |
| E-Modul in Längsrichtung [MPa] | 2600 | 2000 | 2200 | 2000 | 2200 |
| E-Modul in Querrichtung [MPa] | 4800 | 4300 | 4700 | 4500 | 4600 |
| Haze [%] | 2,4 | 1,1 | 2,0 | 1,6 | 2,2 |
| $H_2O$-Permeabilität [g 100$\mu$m/ (m$^2$ d)] | 0,27 | 0,28 | 0,28 | 0,29 | 0,28 |

Tabelle fortgesetzt

| | Beispiel 1 | Beispiel 2 | Vergl. beisp. A | Vergl. beisp. B | Vergl. beisp. C |
|---|---|---|---|---|---|
| $O_2$-Permeabilität [$cm^3$ 100$\mu$m/($m^2$ d bar)] | 410 | 430 | 430 | 440 | 430 |

Bei dem Vergleich der Beispiele und Vergleichsbeispiele wird ersichtlich, daß die Propylenpolymerisat-Zusammensetzung von Beispiele 1 insbesondere eine breitere Molmassenverteilung, d.h. ein erhöhtes Verhältnis $M_w/M_n$, in der Hauptkomponente A aufweist und die Propylenpolymerisat-Zusammensetzung von Beispiel 2 einen erhöhten Anteil an Nebenkomponente B besitzt.

Der Vergleich zwischen Beispiel 2 und Vergleichsbeispiel C zeigt, daß nicht allein durch Einbau von Ethylen eine erfindungsgemäße Zusammensetzungsverteilung der Propylenpolymerisat-Zusammensetzungen erreicht werden kann. Dies erkennt man auch daran, daß der Einbau von 1,1 Gew.% Ethylen in Vergleichsbeispiel C zu einer Absenkung der Schmelztemperatur auf 155,7°C führt, während in Beispiel 2 trotz eines Gehalts von 1,5 Gew.% Ethylen die Schmelztemperatur auf 163,2°C gehalten werden kann.

Tabelle 3 kann entnommen werden, daß mit der Propylenpolymerisat-Zusammensetzung von Beispiele 1 insbesondere bessere mechanische Eigenschaften ohne ein Verlust an Verarbeitbarkeit erhalten werden können. Außerdem sind die Barriereeigenschaften verbessert (geringere Permeabilität von Wasserdampf und Sauerstoff). Die Propylenpolymerisat-Zusammensetzung von Beispiel 2 weist eine bessere Verarbeitbarkeit und bessere optische Eigenschaften (geringere Trübung) auf, ohne daß man Einbußen in den mechanischen Eigenschaften der Folien oder den Barriereeigenschaften in Kauf nehmen muß.

**Patentansprüche**

1. Teilkristalline Propylenpolymerisat-Zusammensetzung mit guter Eignung zur Herstellung von biaxial orientierten Folien, hergestellt durch Polymerisation von Propylen, Ethylen und/oder $C_4$-$C_{18}$-Alk-1-enen, wobei mindestens 50 mol-% der enthaltenen Monomereinheiten durch Polymerisation von Propylen entstanden sind,

   mit einer Schmelztemperatur TM im Bereich von 135°C bis 165°C,

   wobei die Schmelztemperatur TM durch Differential Scanning Calorimetry (DSC) nach ISO-Norm 3146 durch Aufheizen mit einer Heizgeschwindigkeit von 20°C/min einer vorher aufgeschmolzenen Probe bestimmt und in °C gemessen wird und das Maximum der erhaltenen Kurve darstellt,

   und wobei sich die teilkristalline Propylenpolymerisat-Zusammensetzung in

   von 55 bis 75 Gew.-% einer Hauptkomponente A,

   von 5 bis 20 Gew.-% einer Nebenkomponente B und

   von 10 bis 35 Gew.-% einer Nebenkomponente C

   zerlegen lässt,

   wobei man zur Bestimmung der Anteile der Komponenten A, B und C eine TREF (Temperature Rising Elution Fractionation) durchführt, bei der man die Polymerisate zunächst in siedendem Xylol löst, anschliessend die Lösung mit einer Kühlrate von 10°C/h auf 25°C abkühlt und dann mit steigender Temperatur zunächst den bei der Temperatur (TM/2)+7,5 DEG C in Xylol löslichen Anteil der Propylenpolymerisat-Zusammensetzung löst und vom verbleibenden Feststoff abtrennt und anschliessend mit steigender Temperatur bei allen höheren Temperaturen 70°C, 75°C, 80°C, 85°C, 90°C, 94°C, 98°C, 102°C, 107°C, 112°C, 117°C, 122°C und 125°C die im Temperaturintervall zwischen dieser Elutionstemperatur und der vorhergehenden Elutionstemperatur löslichen Fraktionen eluiert und diejenigen Fraktionen bei der weiteren Auswertung berücksichtigt, deren Masseanteil an der eingewogenen Propylenpolymerisat-Zusammensetzung mindestens 1 Gew.-% beträgt, und von allen zu berücksichtigenden Fraktionen die Molmassenverteilung durch Gelpermeationschromatographie (GPC) bei 145°C in 1,2,4-Trichlorbenzol misst,

   und die Hauptkomponente A von allen Fraktionen gebildet wird, die bei einer Temperatur oberhalb von $(T_M/2)$+7,5°C eluiert werden und eine mittlere Molmasse $M_N$ (Zahlenmittel) $\geq$ 120 000 g/mol aufweisen,

   die Nebenkomponente B von der Fraktion gebildet wird, die bei der Temperatur $(T_M/2)$+7,5°C eluiert wird, und

   die Nebenkomponente C von allen zu berücksichtigenden Fraktionen gebildet wird, die bei einer Temperatur oberhalb von $(T_M/2)$+7,5°C eluiert werden und eine mittlere Molmasse $M_N$ (Zahlenmittel) < 120 000 g/mol aufweisen,

   und wobei die die Hauptkomponente A bildenden Fraktionen, die ein Verhältnis Mw/Mn > 4,5 aufweisen, einen Anteil von mindestens 10 Gew.-% an der Hauptkomponente A haben.

2. Teilkristalline Propylenpolymerisat-Zusammensetzung nach Anspruch 1, wobei der bei Raumtemperatur in Xylol lösliche Anteil $X_L$ der teilkristallinen Propylenpolymerisat-Zusammensetzung kleiner oder gleich 5 Gew.-% ist.

**3.** Teilkristalline Propylenpolymerisat-Zusammensetzung nach Anspruch 2, wobei der bei Raumtemperatur in Xylol lösliche Anteil $X_L$ kleiner oder gleich 3 Gew.-% ist.

**4.** Verwendung der teilkristallinen Propylenpolymerisat-Zusammensetzungen nach den Ansprüchen 1 bis 3 zur Herstellung von Folien, Fasern oder Formkörpern.

**5.** Folien, Fasern oder Formkörper enthaltend teilkristalline Propylenpolymerisat-Zusammensetzungen nach den Ansprüchen 1 bis 3.

**6.** Biaxial gereckte Folien aus den teilkristallinen Propylenpolymerisat-Zusammensetzungen nach den Ansprüchen 1 bis 3, die ein Reckverhältnis von mindestens 1:3 in der Längsrichtung und von mindestens 1:5 in der Querrichtung aufweisen.

**Claims**

**1.** A semicrystalline propylene polymer composition with good suitability for producing biaxially oriented films and prepared by polymerizing propylene, ethylene and/or $C_4$-$C_{18}$-1-alkenes, where at least 50 mol% of the monomer units present arise from the polymerization of propylene,

and with a melting point TM of from 135°C to 165°C,

where the melting point TM is determined by Differential Scanning Calorimetry (DSC) to ISO 3146 by heating a previously melted specimen at a heating rate of 20°C/min, and is measured in °C, and is the maximum of the resultant curve,

and where the semicrystalline propylene polymer composition can be broken down into

from 55 to 75% by weight of a principal component A,

from 5 to 20% by weight of an ancillary component B, and

from 10 to 35% by weight of an ancillary component C,

where the proportions of components A, B and C are determined by carrying out TREF (temperature rising elution fractionation) in which the polymers are firstly dissolved in boiling xylene and the solution is then cooled at a cooling rate of 10°C/h to 25°C, and then, as the temperature rises, that fraction of the propylene polymer composition which is soluble in xylene at (TM/2)+7.5°C is then dissolved and separated off from the remaining solid, and then, as the temperature rises, at all of the higher temperatures 70°C, 75°C, 80°C, 85°C, 90°C, 94°C, 98°C, 102°C, 107°C, 112°C, 117°C, 122°C and 125°C the fractions soluble within the temperature range between this elution temperature and the preceding elution temperature are eluted, and the fractions taken into consideration during the evaluation which follows are those whose proportion by weight is at least 1% by weight of the initial weight of the propylene polymer composition specimen, and gel permeation chromatography (GPC) at 145°C in 1,2,4-trichlorobenzene is used to measure the molar mass distribution of all of the fractions to be taken into consideration,

and the principal component A is formed by all of the fractions which are eluted at above $(T_M/2)+7.5°C$ and have an average molar mass $M_n$ (number average) $\geq$ 120 000 g/mol,

the ancillary component B is formed by the fraction which is eluted at $(T_M/2)+7.5°C$, and

the ancillary component C is formed by all of the fractions to be taken into consideration which are eluted at above $(T_M/2)+7.5°C$ and have an average molar mass $M_n$ (number average) < 120 000 g/mol,

and where the fractions forming the principal component A and having a ratio $M_w/M_n > 4.5$ make up at least 10% by weight of the principal component A.

**2.** The semicrystalline propylene polymer composition according to claim 1, where the room-temperature xylene-soluble fraction $X_L$ in the semicrystalline propylene polymer composition is not more than 5% by weight.

**3.** The semicrystalline propylene polymer composition according to claim 2, where the room-temperature xylene-soluble fraction $X_L$ is not more than 3% by weight.

**4.** The use of the semicrystalline propylene polymer compositions according to any of claims 1 to 3 for producing films, fibers or moldings.

**5.** A film, a fiber or a molding comprising semicrystalline propylene polymer compositions according to any of claims 1 to 3.

**6.** A biaxially stretched film made from the semicrystalline propylene polymer compositions according to any of claims 1 to 3 and having a stretching ratio of at least 1:3 longitudinally and of at least 1:5 transversely.

**Revendications**

1. Composition de polymère de propylène partiellement cristallin adapté à la production de films à orientation biaxiale, préparé par polymérisation de propylène, d'éthylène et/ou de 1-alcènes en $C_4$ à $C_{18}$, dans laquelle au moins 50 % en mole des unités monomères obtenues ont été produits par polymérisation du propylène, avec une température de fusion TM dans l'intervalle de 135 °C à 165 °C,

   cette température de fusion TM étant déterminée par « Differential Scanning Calorimetry » (DSC) [analyse calorimétrique à compensation de puissance] d'après la norme ISO 3146 par chauffage avec une vitesse de chauffage de 20 °C/min d'un échantillon précédemment fondu et mesurée en °C et représentant le maximum de la courbe obtenue,

   et où la composition de polymère de propylène partiellement cristallin peut être décomposée en

   - 55 à 75 % en poids d'un composant principal A,
   - 5 à 20 % en poids d'un composant secondaire B et
   - 10 à 35 % en poids d'un composant secondaire C,

   sachant que, pour la détermination des proportions des composants A, B et C, on effectue une TREF (Temperature Rising Elution Fractionation), lors de laquelle on dissout d'abord les produits de polymérisation dans du xylène bouillant, puis on refroidit la solution à 25 °C à une vitesse de refroidissement de 10 °C/h, et ensuite on dissout d'abord à température croissante la part de la composition de produit de polymérisation soluble dans le xylène à la température (TM/2)+7,5 DEG C et on sépare le solide restant et ensuite, à température croissante, on élue à toutes les températures supérieures 70 °C, 75 °C, 85°C, 90 °C, 94 °C, 98 °C, 102 °C, 107 °C, 112 °C, 117 °C, 122 °C et 125 °C les fractions solubles dans l'intervalle de température entre cette température d'élution et la température d'élution précédente et on tient compte pour le reste de l'évaluation des fractions dont la proportion massique par rapport à la composition de produit de polymérisation pesée est d'au moins 1 % en poids, et on mesure la répartition des masses molaires de toutes les fractions à retenir par chromatographie de perméation sur gel (GPC) à 145 °C dans du 1,2,4-trichlorobenzène,

   et que le composant principal A est formé de toutes les fractions qui sont éluées à une température au-dessus de (TM/2)+7,5 °C et qui présentent une masse molaire moyenne $M_N$(moyenne numérique) $\geq$ 120 000 g/mol,

   que le composant secondaire B est formé par la fraction qui est éluée à la température de (TM/2)+7,5 °C, et

   que le composant secondaire C est formé par toutes les fractions à retenir qui sont éluées à une température au-dessus de (TM/2)+7,5 °C et qui présentent une masse molaire moyenne MN(moyenne numérique) < 120 000 g/mol, et sachant que les fractions formant le composant principal A, qui présentent un rapport Mw/Mn > 4,5 ont une proportion d'au moins 10 % en poids du composant principal A.

2. Composition de polymère de propylène partiellement cristallin selon la revendication 1, dans laquelle la part $X_L$, soluble dans le xylène à la température ambiante, de la composition de polymère de propylène partiellement cristallin est inférieure ou égale à 5 % en poids.

3. Composition de polymère de propylène partiellement cristallin selon la revendication 2, dans laquelle la part $X_L$ soluble dans le xylène à la température ambiante est inférieure ou égale à 3 % en poids.

4. Utilisation des composition de polymère de propylène partiellement cristallin selon les revendications 1 à 3 pour la fabrication de feuilles, de fibres ou de corps moulés.

5. Films, fibres ou corps moulés contenant des compositions de polymère de propylène partiellement cristallin selon les revendications 1 à 3.

6. Films étirés bi-axialement en composition de polymère de propylène partiellement cristallin selon les revendications 1 à 3, qui présentent un rapport d'étirage d'au moins 1 : 3 dans la direction longitudinale et d'au moins 1 : 5 dans la direction transversale.